# DEMANDE DE BREVET EUROPEEN

(11) **EP 4 473 879 A1**
(43) Date de publication de la demande: **11.12.2024**
(21) Numéro de dépôt: 24180843.5
(22) Date de dépôt: 07.06.2024
(51) Int. Cl.: A47J 43/046, A47J 43/08

(54) **BASE MOTORISÉE POUR APPAREIL DE PRÉPARATION CULINAIRE**

(30) Priorité: 08.06.2023 FR 2305808
(71) Demandeur: SEB S.A., 69130 Ecully (FR)
(72) Inventeur: GARNIER, Robin, 69134 ECULLY CEDEX (FR); PICHOT, Renaud, 69134 ECULLY CEDEX (FR); CORNU, Jérémy, 69134 ECULLY CEDEX (FR)
(74) Mandataire: SEB Développement

(57) **Abrégé**

L'invention concerne une base motorisée (2) pour un appareil de préparation culinaire (1), comprenant :
- un boîtier (10),
- des moyens d'entraînement (20), logés dans le boîtier (10),
- une partie d'accouplement magnétique de base (30), engagée avec le moteur d'entraînement (21), et mobile entre une position de repos et une position d'accouplement,
- des moyens de guidage, agencés pour guider la partie d'accouplement magnétique de base (30),
- des moyens d'embrayage, agencés pour déplacer la partie d'accouplement magnétique de base (30) entre la position de repos et la position d'accouplement.

Selon l'invention, les moyens d'embrayage comprennent au moins une pièce de commande (41) agencée au moins en partie autour de la partie d'accouplement magnétique de base (30).

## Description

### Domaine technique de l'invention

La présente invention concerne de manière générale les appareils de préparation culinaire prévus pour préparer, et/ou travailler, et/ou cuire les aliments. De tels appareils de préparation culinaires comprennent typiquement une base motorisée avec un moteur d'entraînement, et un bol de préparation culinaire à accoupler de manière réversible sur la base de motorisée et comprenant un outil de travail.

### État de la technique

Dans l'art antérieur des appareils de préparation culinaire, on connaît le document EP 2 548 636 A1 qui divulgue un appareil de préparation culinaire avec une base motorisée logeant un moteur d'entraînement, et un bol de préparation culinaire à accoupler de manière réversible sur la base motorisée et comprenant un outil de travail ainsi qu'un dispositif d'accouplement magnétique entre la base motorisée et le bol de préparation culinaire. En contrepartie, ce système est typiquement complexe avec notamment de nombreuses pièces mobiles dans la base motorisée, y compris le moteur d'entraînement, ce qui conduit à augmenter le volume interne de la base motorisée (car il faut tenir compte des courses de déplacement), ainsi que la complexité et le coût pour assurer un déplacement et/ou un guidage correct(s) de tous ces organes internes.

### Exposé de l'invention

Un but de la présente invention est de répondre aux inconvénients de l'art antérieur mentionnés ci-dessus et en particulier, tout d'abord, de proposer un appareil de préparation culinaire avec une base motorisée logeant un moteur d'entraînement, et un bol de préparation culinaire à accoupler de manière réversible sur ladite base motorisée, l'appareil de préparation culinaire étant prévu pour être compact, et/ou avec des organes internes moins complexes, et/ou avec des guidages internes plus simples et/ou moins nombreux.

Pour cela un premier aspect de l'invention concerne une base motorisée pour un appareil de préparation culinaire,
l'appareil de préparation culinaire comprenant la base motorisée et au moins un bol de préparation culinaire à accoupler sur la base motorisée et comprenant un organe rotatif agencé pour être entraîné en rotation par la base motorisée,
la base motorisée comprenant :
   - un boîtier,
   - des moyens d'entraînement, avec un moteur d'entraînement, logés dans le boîtier,
   - une partie d'accouplement magnétique de base, engagée avec le moteur d'entraînement pour être entraînée en rotation, et mobile par rapport au boîtier et au moteur d'entraînement, entre une position de repos et une position d'accouplement dans laquelle la partie d'accouplement magnétique de base est prévue pour s'accoupler de manière réversible avec une partie d'accouplement magnétique de bol reliée à l'organe rotatif,
   - des moyens de guidage, agencés pour guider la partie d'accouplement magnétique de base dans son mouvement par rapport au moteur d'entraînement,
   - des moyens d'embrayage, agencés pour déplacer la partie d'accouplement magnétique de base entre la position de repos et la position d'accouplement, dans laquelle les moyens d'embrayage comprennent au moins une pièce de commande de la partie d'accouplement magnétique de base agencée au moins en partie autour de la partie d'accouplement magnétique de base. Selon la mise en oeuvre ci-dessus, la pièce de commande entoure au moins partiellement la partie d'accouplement magnétique de base, si bien que la hauteur totale du dispositif est réduite, ce qui améliore la compacité. De plus, la partie d'accouplement magnétique de base est prévue pour se déplacer par rapport au boîtier et en particulier par rapport au moteur d'entraînement, si bien que ce dernier peut être prévu statique par rapport au boîtier : la structure interne peut être simplifiée, sans pièce de grosse taille qui soit mobile, ce qui contribue aussi à la compacité de l'appareil de préparation culinaire.

Selon un mode de réalisation, la pièce de commande peut être agencée pour imposer à la partie d'accouplement magnétique de base un effort de déplacement, entre la position d'accouplement et la position de repos, et parallèle à une direction du mouvement de la partie d'accouplement magnétique de base. La pièce de commande exerce un effort de déplacement sur la partie d'accouplement magnétique de base parallèle à la direction de déplacement : la chaîne cinématique est simple.

Selon un mode de réalisation, la pièce de commande peut être mobile en translation par rapport au boîtier.

Selon un mode de réalisation, les moyens d'embrayage peuvent comprendre au moins une colonne de guidage fixée sur le boîtier, et la pièce de commande peut être montée en liaison glissière sur ladite au moins une colonne de guidage. Un tel guidage est robuste et fiable, et de plus, une telle colonne de guidage peut être logée sur la même hauteur que le déplacement total, ce qui garantit une bonne compacité. Selon un mode de réalisation, la colonne de guidage peut traverser la pièce de commande.

Selon un mode de réalisation, les moyens d'embrayage peuvent comprendre une pièce motorisée engagée avec la pièce de commande selon une liaison hélicoïdale. Une telle liaison permet de transformer efficacement un mouvement de rotation d'un moteur d'embrayage en un mouvement de translation.

Selon un mode de réalisation, la pièce motorisée peut entourer au moins partiellement la pièce de commande, et peut former de préférence une couronne motorisée. Tout comme la pièce de commande peut entourer au moins partiellement la partie d'accouplement magnétique de base, la pièce motorisée peut entourer au moins partiellement la pièce de commande (et donc la partie d'accouplement magnétique de base), si bien que la hauteur totale du dispositif est réduite, ce qui améliore la compacité.

Selon un mode de réalisation, la pièce motorisée peut être montée en liaison pivot sur le boîtier.

Selon un mode de réalisation, les moyens d'embrayage peuvent comprendre un actionneur d'embrayage, tel qu'un moteur d'embrayage, agencé pour provoquer un mouvement de la pièce de commande pour déplacer la partie d'accouplement magnétique de base entre la position de repos et la position d'accouplement. Le mouvement de la partie d'accouplement magnétique de base entre la position de repos et la position d'accouplement peut être automatisé et commandé en fonction des besoins et de l'utilisation de l'appareil de préparation culinaire.

Selon un mode de réalisation, l'actionneur d'embrayage peut comprendre au moins un pignon moteur engagé avec la pièce motorisée. On peut prévoir d'ajuster un rapport de réduction pour adapter les efforts qui entrent en jeu dans le fonctionnement de l'appareil de préparation culinaire.

Selon un mode de réalisation, les moyens d'embrayage peuvent comprendre au moins un capteur de fin de course agencé pour commander un arrêt de l'actionneur d'embrayage une fois la partie d'accouplement magnétique de base arrivée en position de repos ou en position d'accouplement.

Selon un mode de réalisation, ledit au moins un capteur de fin de course peut être fixé sur la pièce motorisée. En particulier, on peut prévoir une partie de capteur (par exemple une cible de détection) embarquée sur la pièce motorisée et une autre partie de capteur (par exemple un corps de détection) solidaire ou montée sur le boîtier.

Selon un mode de réalisation, la pièce de commande peut être agencée pour déplacer la partie d'accouplement magnétique de base de la position d'accouplement à la position de repos, et de préférence la pièce de commande peut être agencée pour déplacer la partie d'accouplement magnétique de base uniquement de la position d'accouplement à la position de repos. Selon une mise en oeuvre préférée, la pièce de commande peut être agencée pour déplacer la partie d'accouplement magnétique de base uniquement de la position d'accouplement à la position de repos, si bien qu'il s'agit d'un mouvement simple effet, ce qui permet de simplifier la structure et les assemblages.

Selon un mode de réalisation, les moyens d'embrayage peuvent comprendre des moyens de rappel élastique, agencés pour exercer un effort élastique sur la partie d'accouplement magnétique de base pour la rappeler vers la position d'accouplement.

Selon un mode de réalisation, la partie d'accouplement magnétique de base peut comprendre au moins un premier aimant d'accouplement, agencé en périphérie de la partie d'accouplement magnétique de base. Le premier aimant d'accouplement, agencé en périphérie de la partie d'accouplement magnétique de base, procure un accouplement qui peut transmettre un fort couple de transmission.

Selon un mode de réalisation, la partie d'accouplement magnétique de base peut comprendre au moins une première couronne en matière magnétique prévue pour canaliser un flux magnétique d'accouplement de la partie d'accouplement magnétique de base. Une telle couronne permet de concentrer les lignes de flux, ce qui permet de mieux utiliser la matière des aimants et d'obtenir plus aisément un accouplement qui peut transmettre un fort couple de transmission.

Selon un mode de réalisation, les moyens de guidage peuvent être formés par une liaison glissière agencée entre la partie d'accouplement magnétique de base et le moteur d'entraînement.

Selon un mode de réalisation, les moyens de guidage peuvent comprendre :
- un arbre de sortie du moteur d'entraînement ou un manchon de sortie solidaire de l'arbre de sortie, comprenant une extrémité cannelée,
- un moyeu rainuré accouplé avec l'extrémité cannelée de l'arbre de sortie ou du manchon de sortie, et solidaire de la partie d'accouplement magnétique de base. Un tel agencement présente typiquement un bon rapport de guidage.

Selon un mode de réalisation, le boîtier peut comprendre une interface de réception, agencée pour recevoir au moins un type de bol de préparation culinaire, et l'interface de réception peut être exempte et/ou libre de :
- toute ouverture donnant sur une pièce mobile d'entraînement, et/ou
- toute pièce mobile d'entraînement, et/ou
- toute protubérance mobile d'entraînement. Autrement dit, l'interface de réception peut être une surface plane, et/ou lisse, ce qui facilite le nettoyage, et procure un bel aspect visuel.

Alternativement, et selon un mode de réalisation, le boîtier peut comprendre une interface de réception avec des moyens de centrage du bol de préparation culinaire sur la base motorisée. En particulier, les moyens de centrage peuvent comprendre un bossage de centrage, et/ou un index de centrage, et/ou une protubérance centrale, le bol de préparation culinaire pouvant comprendre une contreforme femelle pour se centrer sur le bossage de centrage, et/ou l'index de centrage, et/ou la protubérance centrale. On peut prévoir un bossage de centrage, et/ou un index de centrage, et/ou une protubérance centrale avec une forme non symétrique (de révolution, c'est-à-dire non circulaire) pour procurer un arrêt en rotation et/ou une indexation angulaire. On peut prévoir une pluralité de bossages de centrage, et/ou d'index de centrage, et/ou de protubérances pour réaliser un arrêt en rotation. On peut tout aussi bien prévoir d'avoir tout ou partie des formes mâles sur le bol de préparation culinaire plutôt que sur la base motorisée.

Selon un mode de réalisation, la base motorisée peut comprendre des moyens de butée agencés entre le boîtier et la partie d'accouplement magnétique de base lorsque la partie d'accouplement magnétique de base est en position d'accouplement, et les moyens de butée peuvent comprendre de préférence au moins une butée à billes ou une butée à aiguilles. Les moyens de butée permettent de limiter les efforts de frottement, ce qui participe à procurer un accouplement avec une grande efficacité.

Selon un mode de réalisation, les moyens d'embrayage peuvent être agencés pour générer un jeu, de préférence un jeu axial en référence à une direction de déplacement de la partie d'accouplement magnétique de base, entre la pièce de commande et la partie d'accouplement magnétique de base lorsque la partie d'accouplement magnétique de base est en position d'accouplement. Un tel jeu axial permet de limiter les efforts de frottement, ce qui participe à procurer un accouplement avec une grande efficacité.

Selon un mode de réalisation, la base motorisée peut comprendre des moyens de détection et/ou d'identification, agencés pour détecter et/ou identifier un bol de préparation culinaire et/ou un type de bol de préparation culinaire accouplé sur la base motorisée. On peut prévoir d'adapter le fonctionnement de l'appareil de préparation culinaire en fonction du signal émis par les moyens de détection et/ou d'identification. Le document WO2020011574A1 divulgue de tels moyens de détection.

Selon un mode de réalisation, le moteur d'entraînement peut être un moteur du type sans balai et/ou à aimants permanents.

Selon un mode de réalisation, le moteur d'embrayage peut être un moteur du type universel comprenant un rotor et un stator connectés en série.

Selon un mode de réalisation, le moteur d'embrayage peut être un moto-réducteur.

Selon un mode de réalisation, le moteur d'embrayage peut être monté en périphérie de la pièce motorisée.

Selon un mode de réalisation, la pièce motorisée peut être agencée entre le moteur d'embrayage et la partie d'accouplement magnétique de bol.

Selon un mode de réalisation, lorsque la partie d'accouplement magnétique de base est dans la position de repos, la pièce de commande peut être agencée pour former un obstacle à un déplacement de la partie d'accouplement magnétique de base vers la position accouplée. Selon ce mode de réalisation, la pièce de commande peut comprendre un rebord, ou un ergot, ou un épaulement qui forme un obstacle ou une butée ou un barrage à la partie d'accouplement magnétique de base, en particulier à un déplacement vers la position accouplée.

Autrement dit, l'invention peut concerner une base motorisée pour un appareil de préparation culinaire,
l'appareil de préparation culinaire comprenant la base motorisée et au moins un bol de préparation culinaire à accoupler sur la base motorisée et comprenant un organe rotatif agencé pour être entraîné en rotation par la base motorisée,
la base motorisée comprenant :
   - un boîtier,
   - des moyens d'entraînement, avec un moteur d'entraînement, logés dans le boîtier,
   - une partie d'accouplement magnétique de base, engagée avec le moteur d'entraînement pour être entraînée en rotation, et mobile par rapport au boîtier et au moteur d'entraînement, entre une position de repos et une position d'accouplement dans laquelle la partie d'accouplement magnétique de base est prévue pour s'accoupler de manière réversible avec une partie d'accouplement magnétique de bol reliée à l'organe rotatif,
   - des moyens de guidage, agencés pour guider la partie d'accouplement magnétique de base dans son mouvement par rapport au moteur d'entraînement,
   - des moyens d'embrayage, agencés pour déplacer la partie d'accouplement magnétique de base entre la position de repos et la position d'accouplement, dans laquelle lorsque la partie d'accouplement magnétique de base est dans la position de repos, la pièce de commande est agencée pour former un obstacle à un déplacement de la partie d'accouplement magnétique de base vers la position accouplée.

Selon un mode de réalisation, la partie d'accouplement magnétique de base peut être agencée pour générer des lignes de flux magnétique parallèles à une direction de déplacement de la partie d'accouplement magnétique de base, au moins entre la partie d'accouplement magnétique de base et la partie d'accouplement magnétique de bol. Un tel agencement procure un faible encombrement radial, et peut permettre de prévoir une interface d'accouplement avec une surface plane.

Autrement dit, l'invention peut concerner une base motorisée pour un appareil de préparation culinaire,
l'appareil de préparation culinaire comprenant la base motorisée et au moins un bol de préparation culinaire à accoupler sur la base motorisée et comprenant un organe rotatif agencé pour être entraîné en rotation par la base motorisée,
la base motorisée comprenant :
   - un boîtier,
   - des moyens d'entraînement, avec un moteur d'entraînement, logés dans le boîtier
   - une partie d'accouplement magnétique de base, engagée avec le moteur d'entraînement pour être entraînée en rotation, et mobile par rapport au boîtier et au moteur d'entraînement, entre une position de repos et une position d'accouplement dans laquelle la partie d'accouplement magnétique de base est prévue pour s'accoupler de manière réversible avec une partie d'accouplement magnétique de bol reliée à l'organe rotatif,
   - des moyens de guidage, agencés pour guider la partie d'accouplement magnétique de base dans son mouvement par rapport au moteur d'entraînement,
   - des moyens d'embrayage, agencés pour déplacer la partie d'accouplement magnétique de base entre la position de repos et la position d'accouplement, dans laquelle la partie d'accouplement magnétique de base est agencée pour générer des lignes de flux magnétique parallèles à une direction de déplacement de la partie d'accouplement magnétique de base, au moins entre la partie d'accouplement magnétique de base et la partie d'accouplement magnétique de bol.

Un deuxième aspect de l'invention peut concerner un bol de préparation culinaire prévu pour être accouplé à la base motorisée selon le premier aspect de l'invention, le bol de préparation culinaire comprenant au moins :
- un socle et/ou une plaque inférieure à accoupler sur le boîtier de la base motorisée,
- une cuve de travail,
- un organe rotatif,
- une partie d'accouplement magnétique de bol, liée à l'organe rotatif.

Selon un mode de réalisation, le socle ou la coque inférieure et la cuve de travail peuvent être venus d'une même pièce, et/ou peuvent être formés d'un seul tenant.

Selon un mode de réalisation, le socle et/ou la coque inférieure et/ou la cuve de travail peu(ven)t être exempt(e) de trou traversant. Autrement dit, l'accouplement magnétique de bol de préparation culinaire ne nécessite pas d'arbre traversant complètement le socle et/ou la coque inférieure et/ou la cuve de travail.

Selon un mode de réalisation, l'organe rotatif peut former un entraîneur agencé pour recevoir de manière amovible un outil de travail.

Selon un mode de réalisation, l'organe rotatif peut former un outil de travail.

Selon un mode de réalisation, l'organe rotatif peut être monté à demeure sur la cuve de travail.

Selon un mode de réalisation, l'organe rotatif peut être monté amovible sur la cuve de travail.

Selon un mode de réalisation, le bol de préparation culinaire peut comprendre des moyens embarqués de détection et/ou d'identification, agencés pour permettre de détecter et/ou d'identifier le bol de préparation culinaire et/ou le type de bol de préparation culinaire accouplé sur la base motorisée selon le premier aspect de l'invention.

Un troisième aspect de l'invention peut concerner un appareil de préparation culinaire comportant une base motorisée selon le premier aspect de l'invention et un bol de préparation culinaire selon le deuxième aspect de l'invention.

### Description des figures

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
[Fig. 1] représente une vue générale de face d'un appareil de préparation culinaire comprenant une base motorisée et un bol de préparation culinaire prévu pour être monté sur une interface de réception de la base motorisée ;
[Fig. 2] représente une vue en coupe de la base motorisée de l'appareil de préparation culinaire de la figure 1, avec une partie d'accouplement magnétique de base dans une position de repos ;
[Fig. 3] représente une vue en coupe de la base motorisée de la figure 2, avec la partie d'accouplement magnétique de base dans une position d'accouplement ;
[Fig. 4] représente une vue en coupe de l'appareil de préparation culinaire de la figure 1 comprenant la base motorisée de la figure 3, accouplée avec le bol de préparation culinaire.

### Description détaillée de mode(s) de réalisation

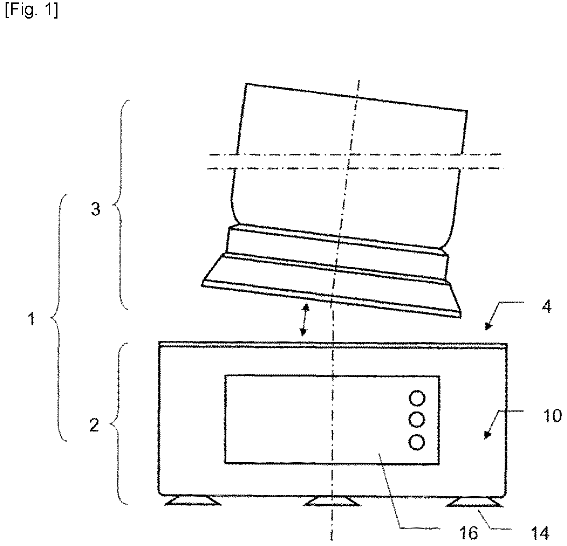

La figure 1 représente une vue de face d'un appareil de préparation culinaire 1 comprenant une base motorisée 2 et un bol de préparation culinaire 3 prévu pour s'accoupler de manière réversible sur une interface de réception 4 de la base motorisée 2.

La base motorisée 2 comprend un boîtier 10 avec des pieds 14 et une interface homme machine 16 avec dans l'exemple représenté un écran d'affichage et des boutons de commande. L'interface de réception 4 est formée dans cet exemple par la face supérieure de la base motorisée 2, et se présente dans cet exemple sous la forme d'une surface plane.

Le bol de préparation culinaire 3 est prévu pour recevoir des aliments à préparer et/ou à cuisiner. A cet effet, le bol de préparation culinaire 3 comprend typiquement un outil de travail (qui peut être amovible ou non), un couvercle (avec par exemple une goulotte d'alimentation), des moyens de préhension (une poignée)... L'outil de travail peut typiquement comprendre un couteau ou une pale de brassage, ou une pale de mélange, ou une pale de pétrissage, pour couper, hacher, brasser, mélanger, presser, pétrir les aliments à préparer reçus dans le bol de préparation culinaire 3. On peut aussi prévoir de manière optionnelle que le bol de préparation culinaire 3 puisse résister à la chaleur pour cuire les aliments à préparer. On peut prévoir des moyens de cuisson (chauffage par résistance ou par induction) dans le bol de préparation culinaire 3 et/ou dans la base motorisée 2.

Comme le montre la figure 1, le bol de préparation culinaire 3 est prévu pour s'accoupler avec la base motorisée 2 de manière réversible, et pour entraîner en mouvement l'outil de travail du bol de préparation culinaire 3, l'appareil de préparation culinaire 1 propose un dispositif d'accouplement magnétique entre un moteur d'entraînement 21 de la base motorisée 2 et l'outil de travail du bol de préparation culinaire 3.

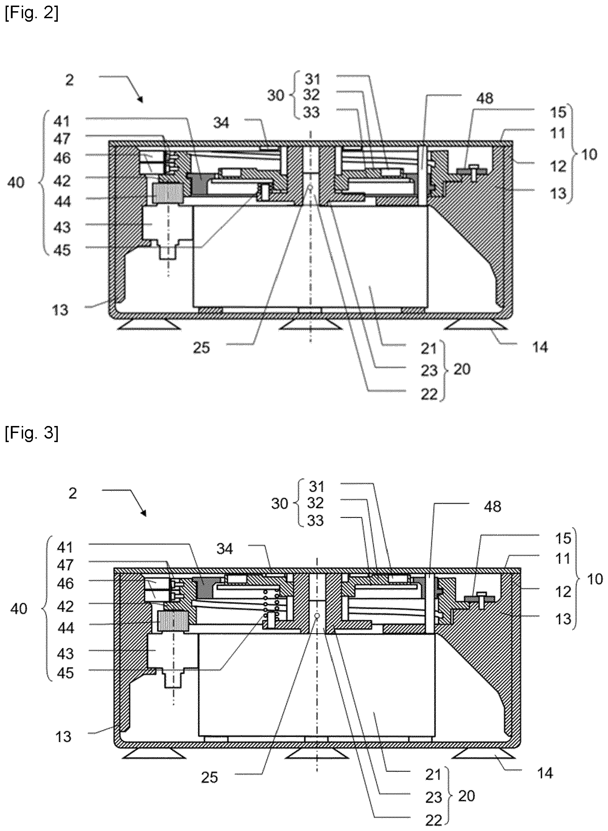

Comme le montre la figure 2, la base motorisée 2 comprend notamment :
- le boîtier 10,
- des moyens d'entraînement 20, avec le moteur d'entraînement 21, logés dans le boîtier 10,
- une partie d'accouplement magnétique de base 30, engagée avec le moteur d'entraînement 21 pour être entraînée en rotation, et mobile par rapport au boîtier 10 et au moteur d'entraînement 21, entre une position de repos (voir figure 2) et une position d'accouplement (voir figure 3) dans laquelle la partie d'accouplement magnétique de base 30 est prévue pour s'accoupler de manière réversible avec une partie d'accouplement magnétique de bol 60 reliée à un organe rotatif 70,
- des moyens de guidage, agencés pour guider la partie d'accouplement magnétique de base 30 dans son mouvement par rapport au moteur d'entraînement 21,
- des moyens d'embrayage 40, agencés pour déplacer la partie d'accouplement magnétique de base 30 entre la position de repos et la position d'accouplement.

Dans le détail, le boîtier 10 comprend un corps de boîtier 12 coiffé par une paroi supérieure de boîtier 11, des nervures 13 internes. Le boîtier 10 est typiquement réalisé en matière plastique, mais on peut prévoir des parties métalliques (des capots, des inserts métalliques), ou même de réaliser par exemple le corps de boîtier 12 en métal.

Les moyens d'entraînement 20 comprennent le moteur d'entraînement 21 avec un arbre de sortie 22 supportant un manchon de sortie 23 solidaire de l'arbre de sortie 22 via par exemple des cannelures et notamment une goupille 25. Le moteur d'entraînement 21 est typiquement un moteur à aimants permanents, autrement appelé moteur sans balais (brushless en langue anglaise). Un tel moteur d'entraînement 21 est compact et présente de grandes performances, tant en couple qu'en vitesse de rotation.

La partie d'accouplement magnétique de base 30 est engagée avec le moteur d'entraînement 21 via le manchon de sortie 23, et comporte notamment un support mobile 32, qui embarque plusieurs premiers aimants d'accouplement 31 et une première couronne 33 en matière magnétique prévue pour canaliser un flux magnétique des premiers aimants d'accouplement 31. On peut noter que les premiers aimants d'accouplement 31 sont agencés en périphérie du support mobile 32, de sorte à pouvoir transmettre un couple de transmission élevé.

Les moyens de guidage sont agencés pour guider la partie d'accouplement magnétique de base 30 dans son mouvement par rapport au moteur d'entraînement 21. A cet effet, on peut noter que le support mobile 32 présente des rainures sur son moyeu engagées avec des cannelures prévues sur le diamètre externe de l'arbre formé par le manchon de sortie 23, ce moyeu étant ainsi rainuré, si bien que le support mobile 32 peut coulisser verticalement par rapport au manchon de sortie 23 (et donc par rapport au moteur d'entraînement 21 et au boîtier 10), tout en étant entraîné en rotation par le moteur d'entraînement 21. La partie d'accouplement magnétique de base 30 comporte aussi des moyens de butée, une butée à aiguilles 34 dans cet exemple, pour limiter le mouvement de la partie d'accouplement magnétique de base 30 vers le haut de la figure 2 ou 3 en prenant appui sur la paroi supérieure de boîtier 11.

Les moyens d'embrayage 40, agencés pour déplacer la partie d'accouplement magnétique de base 30 entre la position de repos et la position d'accouplement, comprennent au moins :
- une pièce de commande 41 prévue pour commander le mouvement de la partie d'accouplement magnétique de base 30, et comprenant notamment un rebord qui coiffe la première couronne 33,
- des colonnes de guidage 48 fixées sur le boîtier 10, et montées en liaison glissière avec la pièce de commande 41,
- une pièce motorisée 42 montée en liaison pivot sur le boîtier 10 (via les nervures 13 et une butée 15 vissée sur le boîtier 10) et engagée avec la pièce de commande 41 selon une liaison hélicoïdale,
- un moteur d'embrayage 43 comprenant un pignon moteur 44 engagé avec la pièce motorisée 42, pour provoquer un mouvement de la pièce de commande 41 pour déplacer la partie d'accouplement magnétique de base 30 entre la position de repos et la position d'accouplement,
- des moyens de rappel élastique formés par des ressorts de compression 45 agencés entre le manchon de sortie 23 et le support mobile 32 et prévus pour exercer un effort de rappel de la partie d'accouplement magnétique de base 30 vers la position d'accouplement,
- des capteurs de fin de course 46 montés entre le boîtier 10 (sur une nervure 13) et la pièce motorisée 42, prévus pour coopérer avec des organes de détection 47 portés par la pièce motorisée 42, les capteurs de fin de course 46 étant agencés pour commander un arrêt du moteur d'embrayage 43 une fois la partie d'accouplement magnétique de base 30 arrivée en position de repos ou en position d'accouplement.

Comme indiqué ci-dessus, la partie d'accouplement magnétique de base 30 peut occuper une position de repos, comme représenté figure 2, et une position d'accouplement, comme représenté figure 3.

En effet, en partant de la position de repos de la figure 2, le moteur d'embrayage 43 peut être mis en fonctionnement pour entraîner la pièce motorisée 42 en rotation. Ce faisant, en raison de la liaison hélicoïdale entre la pièce motorisée 42 et la pièce de commande 41, et en raison de la liaison glissière entre les colonnes de guidage 48 et la pièce de commande 41, cette dernière va se déplacer verticalement vers le haut pour atteindre la position occupée en figure 3. Simultanément, les ressorts de compression 45 poussent le support mobile 32 qui coulisse sur le manchon de sortie 23, et qui suit le mouvement de la pièce de commande 41 pour positionner la partie d'accouplement magnétique de base 30 en position d'accouplement comme montré en figure 3.

Dans le sens inverse, en partant de la position d'accouplement comme montré en figure 3, le moteur d'embrayage 43 peut être mis en fonctionnement pour entraîner la pièce motorisée 42 en rotation selon un sens opposé à précédemment. Ce faisant, en raison de la liaison hélicoïdale entre la pièce motorisée 42 et la pièce de commande 41, et en raison de la liaison glissière entre les colonnes de guidage 48 et la pièce de commande 41, cette dernière va se déplacer verticalement vers le bas pour atteindre la position occupée en figure 2. Lors de ce mouvement, et malgré les ressorts de compression 45 qui poussent le support mobile 32 vers le haut, la pièce de commande 41 avec son rebord qui coiffe la première couronne 33, agit sur le support mobile 32 qui ne peut que coulisser sur le manchon de sortie 23 pour suivre le mouvement de la pièce de commande 41 vers le bas afin de positionner la partie d'accouplement magnétique de base 30 en position de repos comme en figure 2.

En référence à la figure 1, on peut noter que :
- lorsque la partie d'accouplement magnétique de base 30 occupe la position de repos, le bol de préparation culinaire 3 peut être librement placé ou retiré de l'interface de réception 4 de la base motorisée 2,
- lorsque la partie d'accouplement magnétique de base 30 occupe la position d'accouplement, le bol de préparation culinaire 3 ne peut être librement retiré de l'interface de réception 4 de la base motorisée 2.

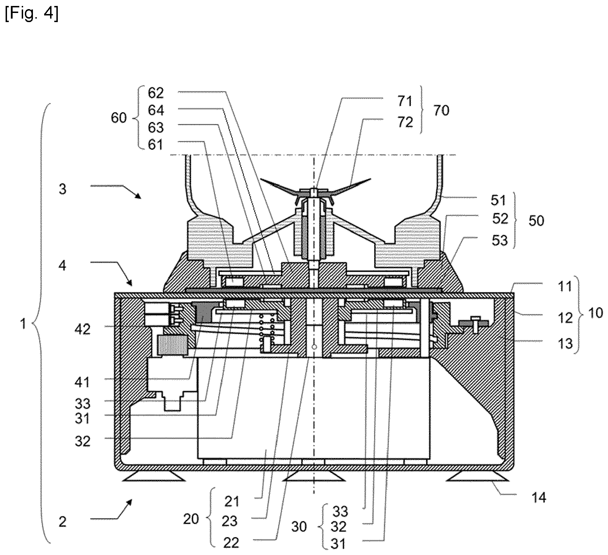

La figure 4 représente une vue en coupe de l'appareil de préparation culinaire 1 de la figure 1 comprenant la base motorisée 2 de la figure 3, accouplée avec le bol de préparation culinaire 3.

En particulier, le bol de préparation culinaire 3 comprend au moins :
- un corps de bol 50, comprenant notamment une cuve de travail 51, un socle 52 soutenant la cuve de travail 51 et une plaque inférieure 53 à accoupler sur l'interface de réception 4 de la base motorisée 2,
- l'organe rotatif 70 constitué dans l'exemple représenté par un couteau bilame 72 porté par un arbre tournant 71,
- une partie d'accouplement magnétique de bol 60, liée à l'organe rotatif 70 et comprenant notamment un support rotatif 62 encastré avec l'arbre tournant 71, des seconds aimants embarqués d'accouplement 61, une butée à aiguilles embarquée 63, et une seconde couronne 64 en matière magnétique prévue pour canaliser un flux magnétique des seconds aimants embarqués d'accouplement 61. On peut noter que les seconds aimants embarqués d'accouplement 61 sont agencés en périphérie du support rotatif 62, de sorte à pouvoir transmettre un couple de transmission élevé.

La partie d'accouplement magnétique de bol 60 et l'organe rotatif 70 sont montés en liaison pivot par rapport à la cuve de travail 51, et le support rotatif 62 est en butée axiale avec la plaque inférieure 53 par le biais de la butée à aiguilles embarquée 63.

Comme le représente la figure 4, la partie d'accouplement magnétique de base 30 occupe la position d'accouplement, et est agencée en regard de la partie d'accouplement magnétique de bol 60 du bol de préparation culinaire 3 posé sur l'interface de réception 4 de la base motorisée 2. Dans cette configuration de la figure 4, la partie d'accouplement magnétique de base 30 est accouplée avec la partie d'accouplement magnétique de bol 60 et le moteur d'entraînement 21 peut entraîner en rotation l'organe rotatif 70 de manière fiable et robuste. On peut noter qu'il existe un jeu entre le rebord de la pièce de commande 41 et la première couronne 33 pour éviter toute usure ou frottement intempestif.

On peut aussi noter que la partie d'accouplement magnétique de base 30 accouplée avec la partie d'accouplement magnétique de bol 60 participe à positionner le bol de préparation culinaire 3 sur la base motorisée 2 de manière autonome et suffisante, si bien qu'il n'est pas nécessaire de prévoir de centreur ou d'indexage en relief. L'interface de réception 4 peut donc être une surface plane exempte de tout élément en relief. Bien entendu, il n'est pas exclu de prévoir de tels éléments en relief, pour par exemple procurer un arrêt en rotation, ou encore apporter une aide au positionnement pour l'utilisateur...

Comme vu ci-dessus, dans la configuration de la figure 4, pour retirer le bol de préparation culinaire 3 de la base motorisée 2, il suffit de commander le moteur d'embrayage 43 pour mettre en rotation la pièce motorisée 42 et forcer la descente de la pièce de commande 41 et donc de la partie d'accouplement magnétique de base 30 pour la déplacer vers la position de repos de la figure 2.

On peut prévoir de commander le déplacement de la partie d'accouplement magnétique de base 30 entre la position de repos (figure 2) et la position d'accouplement (figure 3 ou 4) avec le moteur d'entraînement 21 à l'arrêt pour limiter les frottements entre la pièce de commande 41 et la première couronne 33. Cependant, on peut prévoir d'avoir un déplacement de la partie d'accouplement magnétique de base 30 entre la position de repos (figure 2) et la position d'accouplement (figure 3 ou 4) avec le moteur d'entraînement 21 en fonctionnement, par exemple dans des situations particulières (comme à faible vitesse), ou en prévoyant un contact entre la pièce de commande 41 et la première couronne 33 résistant aux frottements (matières à faible coefficient de frottement, ou même une butée à aiguilles par exemple) entre ces deux pièces.

### Application industrielle

Un appareil de préparation culinaire selon la présente invention, et sa fabrication, sont susceptibles d'application industrielle.

On comprendra que diverses modifications et/ou améliorations évidentes pour l'homme du métier peuvent être apportées aux différents modes de réalisation de l'invention décrits dans la présente description sans sortir du cadre de l'invention.

## Revendications

1. Base motorisée (2) pour un appareil de préparation culinaire (1),
l'appareil de préparation culinaire (1) comprenant la base motorisée (2) et au moins un bol de préparation culinaire (3) à accoupler sur la base motorisée (2) et comprenant un organe rotatif (70) agencé pour être entraîné en rotation par la base motorisée (2),
la base motorisée (2) comprenant :
- un boîtier (10),
- des moyens d'entraînement (20), avec un moteur d'entraînement (21), logés dans le boîtier (10),
- une partie d'accouplement magnétique de base (30), engagée avec le moteur d'entraînement (21) pour être entraînée en rotation, et mobile par rapport au boîtier (10) et au moteur d'entraînement (21), entre une position de repos et une position d'accouplement dans laquelle la partie d'accouplement magnétique de base (30) est prévue pour s'accoupler de manière réversible avec une partie d'accouplement magnétique de bol (60) reliée à l'organe rotatif (70),
- des moyens de guidage, agencés pour guider la partie d'accouplement magnétique de base (30) dans son mouvement par rapport au moteur d'entraînement (21),
- des moyens d'embrayage (40), agencés pour déplacer la partie d'accouplement magnétique de base (30) entre la position de repos et la position d'accouplement,
**caractérisée en ce que** les moyens d'embrayage (40) comprennent au moins une pièce de commande (41) de la partie d'accouplement magnétique de base (30) agencée au moins en partie autour de la partie d'accouplement magnétique de base (30).

2. Base motorisée (2) selon la revendication 1, dans laquelle la pièce de commande (41) est agencée pour imposer à la partie d'accouplement magnétique de base (30) un effort de déplacement, entre la position d'accouplement et la position de repos, et parallèle à une direction du mouvement de la partie d'accouplement magnétique de base (30).

3. Base motorisée (2) selon l'une des revendications 1 ou 2, dans laquelle la pièce de commande (41) est mobile en translation par rapport au boîtier (10).

4. Base motorisée (2) selon l'une des revendications 1 à 3, dans laquelle les moyens d'embrayage (40) comprennent au moins une colonne de guidage (48) fixée sur le boîtier (10), et dans laquelle la pièce de commande (41) est montée en liaison glissière sur ladite au moins une colonne de guidage (48).

5. Base motorisée (2) selon l'une des revendications 1 à 4, dans laquelle les moyens d'embrayage (40) comprennent une pièce motorisée (42) engagée avec la pièce de commande (41) selon une liaison hélicoïdale.

6. Base motorisée (2) selon la revendication 5, dans laquelle la pièce motorisée (42) entoure au moins partiellement la pièce de commande (41), et forme de préférence une couronne motorisée.

7. Base motorisée (2) selon la revendication 5 ou 6, dans laquelle la pièce motorisée (42) est montée en liaison pivot sur le boîtier (10).

8. Base motorisée (2) selon l'une des revendications 1 à 7, dans laquelle les moyens d'embrayage (40) comprennent des moyens de rappel élastique (45), agencés pour exercer un effort élastique sur la partie d'accouplement magnétique de base (30) pour la rappeler vers la position d'accouplement.

9. Base motorisée (2) selon l'une des revendications 1 à 8, dans laquelle la partie d'accouplement magnétique de base (30) comprend au moins un premier aimant d'accouplement (31), agencé en périphérie de la partie d'accouplement magnétique de base (30).

10. Base motorisée (2) selon l'une des revendications 1 à 9, dans laquelle la partie d'accouplement magnétique de base (30) comprend au moins une première couronne (33) en matière magnétique prévue pour canaliser un flux magnétique d'accouplement de la partie d'accouplement magnétique de base (30).

11. Base motorisée (2) selon l'une des revendications 1 à 10, dans laquelle les moyens de guidage sont formés par une liaison glissière agencée entre la partie d'accouplement magnétique de base (30) et le moteur d'entraînement (21).

12. Base motorisée (2) selon l'une des revendications 1 à 11, dans laquelle les moyens de guidage comprennent :
- un arbre de sortie (22) du moteur d'entraînement (21) ou un manchon de sortie (23) solidaire de l'arbre de sortie (22), comprenant une extrémité cannelée,
- un moyeu rainuré accouplé avec l'extrémité cannelée de l'arbre de sortie (22) ou du manchon de sortie (23), et solidaire de la partie d'accouplement magnétique de base (30).

13. Base motorisée (2) selon l'une des revendications 1 à 12, dans laquelle le boîtier (10) comprend une interface de réception (4), agencée pour recevoir au moins un type de bol de préparation culinaire (3), et dans laquelle l'interface de réception (4) est exempte et/ou libre de :
- toute ouverture donnant sur une pièce mobile d'entraînement, et/ou
- toute pièce mobile d'entraînement, et/ou
- toute protubérance mobile d'entraînement.

14. Bol de préparation culinaire (3) prévu pour être accouplé à la base motorisée (2) selon l'une des revendications 1 à 13, le bol de préparation culinaire (3) comprenant au moins :
- un socle (52) et/ou une plaque inférieure (53) à accoupler sur le boîtier (10) de la base motorisée (2),
- une cuve de travail (51),
- un organe rotatif (70),
- une partie d'accouplement magnétique de bol (60), liée à l'organe rotatif (70).

15. Appareil de préparation culinaire (1) comportant une base motorisée (2) selon l'une des revendications 1 à 13 et un bol de préparation culinaire (3) selon la revendication 14.
